# EUROPEAN PATENT APPLICATION

(11) **EP 4 083 917 A1**
(43) Date of publication of application: **02.11.2022**
(21) Application number: 20916169.4
(22) Date of filing: 09.12.2020
(51) Int. Cl.: G06T 7/593

(54) **DEPTH IMAGE PROCESSING METHOD, SMALL OBSTACLE DETECTION METHOD AND SYSTEM, ROBOT, AND MEDIUM**

(30) Priority: 20.01.2020 CN 202010062330
(71) Applicant: Shenzhen Pudu Technology Co., Ltd., Shenzhen, Guangdong 518000 (CN)
(72) Inventor: LIU, Yong, Shenzhen, Guangdong 518000 (CN); ZHU, Jun An, Shenzhen, Guangdong 518000 (CN); HUANG, Yin, Shenzhen, Guangdong 518000 (CN); GUO, Cong, Shenzhen, Guangdong 518000 (CN)
(74) Representative: Appleyard Lees IP LLP
(86) International application number: PCT/CN2020/135024
(87) International publication number: WO 2021/147545

(57) **Abstract**

Provided are a depth image processing method, and a small obstacle detection method and system. The method comprises calibration of sensors, distortion and epipolar rectification, data alignment, and sparse stereo matching. The depth image processing method and the small obstacle detection method and system of the present invention only requires execution of sparse stereo matching on hole portions of a structured light depth image, and do not requires stereo matching of the entire image, thereby significantly reducing the overall computation load for processing a depth image, and enhancing the robustness of a system.

## Description

### CROSS REFERENCE TO RELATED APPLICATION

The present application is based on and claims priority to Chinese Patent Application with No. 202010062330.9 and filed on January 20, 2020, the content of which is expressly incorporated herein by reference in its entirety.

### TECHNICAL FIELD

The present application relates to the field of robot technology, and particularly to a depth image processing method, a small obstacle detection method and system, a robot and a medium.

### BACKGROUND

Obstacle detection is an important part of autonomous navigation of robots and has been widely studied in robotic and vision field, and has been applied in some consumer products. When small obstacles cannot be accurately detected, the safety of movement of the robot may be affected. However, in the actual environment, due to the variety and small size of the small obstacles, the detection of the small obstacles is still a challenge.

### SUMMARY

The obstacle detection in robot scenes generally obtains three-dimensional information (such as a three-dimensional position, a contour) of a target through a distance acquisition sensor or algorithm. On the one hand, due to the small size of the small obstacle, more accurate three-dimensional information should be acquired during detection, which requires higher measurement accuracy and resolution of the sensor and algorithm. An active sensor such as a radar or sonar has a high measurement accuracy, but low resolution; the depth camera based on infrared structured light can achieve a high resolution, but it is easily interfered by sunlight. When the interference is large, the image has a hole and there is insufficient robustness when the target is small. For a passive sensor such as a binocular stereo matching or sequence image stereo matching, if indistinguishable dense reconstruction is used, there is a large amount of calculation, and it is difficult to reconstruct a small target, especially when there is a lot of background noise. On the other hand, there are various types of small obstacles, and detection solution and algorithm are required to be applicable to various types of small obstacles. If the obstacle is detected directly, the detected object needs to be pre-defined, and there are certain limitations to the robustness.

In view of this, the purpose of the present invention is to provide a depth image processing method, a small obstacle detection method and system, a robot and a medium, which improve the robustness and accuracy of the solution and algorithm, thereby improving the accuracy of the detection of various small obstacles.

In order to achieve the above purpose, the embodiment of the present invention provide the following technical solution.

A depth image processing method includes:
calibrating a sensor, the sensor comprising a binocular camera and a structured light depth camera, the binocular camera being configured to acquire a left image and a right image, the structured light depth camera being configured to acquire a structured light depth image, calibrating an internal parameter distortion and an external parameter of the binocular camera, and calibrating an external parameter of the binocular camera and an external parameter of the structured light depth camera;
performing distortion and epipolar rectifications on the left image and the right image;
performing data alignment, aligning the structured light depth image with the external parameter of the structured light depth camera to a coordinate system of the left image and the right image and obtaining a binocular depth image;
performing sparse stereo matching, performing the sparse stereo matching on a hole portion of the structured light depth image and obtaining a parallax error, converting the parallax error into a depth, fusing the structured light depth image and the binocular depth image by using the depth, and reconstructing a robust depth image.

Accordingly, there is no need to perform stereo matching on the whole image, but only perform sparse stereo matching on the hole portion of the structured light depth image, which significantly reduces the amount of computation of processing the depth image and improves the robustness of the system.

In addition, the performing the sparse stereo matching includes:
extracting a hole mask, performing the sparse stereo matching on an image within the hole mask and obtaining the parallax error.

In addition, the performing the distortion and epipolar rectifications includes:
constraining matching points for the sparse stereo matching to align on a horizontal line.

In this case, the time for subsequent stereo matching is significantly reduced and the accuracy is greatly improved.

A small obstacle detection method is further provided, including the above-mentioned depth image processing method, the detection method is applied to detect a small obstacle on the ground, the method further includes:
respectively acquiring ground images through the binocular camera and the structured light depth camera;
performing a dense reconstruction on dominant backgrounds in the ground images, and performing a sparse feature reconstruction on a position in an image with a large gradient by the binocular camera;
extracting a three-dimensional point cloud through a visual processing technology, separating and detecting a point cloud of the small obstacle through a "subtraction background" detection method;
mapping the point cloud of the small obstacle to an image, and performing an image segmentation to obtain a target image;
performing a three-dimensional reconstruction on the target image through a fusion solution to obtain a complete dense point cloud.

In this case, the overall robustness of the method is improved by performing a dense reconstruction on the dominant background in the ground image and using a "subtracted background" detection method to separate and detect the point cloud of the small obstacle; and through mapping the small obstacle to the image and performing image segmentation, the small obstacle can be completely segmented in order to achieve an accurate 3D reconstruction, so that the method provides a guarantee for the accuracy of the detection of the small obstacle.

In addition, the performing the sparse stereo matching further includes:
partitioning the robust depth image into blocks, converting the depth image in each block into the point cloud, and performing ground fitting on the point cloud with a plane model; removing the point cloud in the block if the point cloud in the block does not satisfy a plane assumption, or reserving the point cloud in the block if the point cloud in the block satisfies the plane assumption;
performing a secondary verification on the reserved block through a deep neural network, performing a region growth on the block passing the secondary verification based on a plane normal and a center of gravity, segmenting a three-dimensional plane equation and a boundary point cloud of a large ground;
acquiring a distance between a point cloud in a block that fails to pass the secondary verification and the ground to which the point cloud corresponds, if the distance is greater than a threshold value, segmenting the block and obtaining a suspected obstacle;
mapping the point cloud corresponding to the suspected obstacle to the image as a seed point for a region segmentation, growing the seed point, and extracting a complete obstacle region;
mapping the obstacle region to a complete point cloud to complete the detection of the three-dimensional small obstacle.

In this case, the depth image in the block that conforms to the plane model but not the ground can be excluded through the secondary verification, thereby overall improving the detection accuracy of the small obstacle.

In addition, the binocular camera includes a left camera and a right camera, the ground image obtained by the left camera comprises a left image, the ground image obtained by the right camera comprises a right image, and the structured light depth camera is configured to acquire the structured light depth image of the ground.

The present invention further provides a small obstacle detection system, including the above-mentioned small obstacle detection method.

In addition, the small obstacle detection system further includes a robot body, the binocular camera and the structured light depth camera are provided on the robot body, the binocular camera and the structured light depth camera are arranged to tilt towards the ground.

A robot includes a processor and a memory storing a computer program, the processor is configured to execute the computer program to implement the above-mentioned depth image processing method or small obstacle detection method.

A computer storage medium is provided, on which a computer program is stored, when the computer program is executed, the above-mentioned depth image processing method or the small obstacle detection method is implemented.

In this case, the region of the ground covered by the image collected by the binocular camera and the structured light depth camera is improved, and the completeness of the recognition of the small obstacle is significantly improved.

According to the depth image processing method, the small obstacle detection method and system provided by the present invention, there is no need to perform stereo matching on the whole image, but only perform the sparse stereo matching on the hole portion of the structured light depth image, which significantly reduces the overall amount of computation of processing the depth image, and improves the robustness of the system.

### BRIEF DESCRIPTION OF THE DRAWINGS

FIG. 1 is a flow chart showing a depth image processing method according to an embodiment of the present invention.
FIG. 2 is a flow chart showing a small obstacle detection method according to an embodiment of the present invention.
FIG. 3 is a flow chart showing sparse stereo matching of a small obstacle detection method according to an embodiment of the present invention.

### DETAILED DESCRIPTION

Hereinafter, preferred embodiments of the present invention will be described in detail with reference to the accompanying drawings. In the following description, the same reference signs are assigned to the same components, and overlapping descriptions are omitted. In addition, the drawings are merely schematic diagrams, ratios of dimensions of members or shapes of the members and the like may be different from the actual ones.

Embodiments of the present invention relate to a depth image processing method, a small obstacle detection method and system.

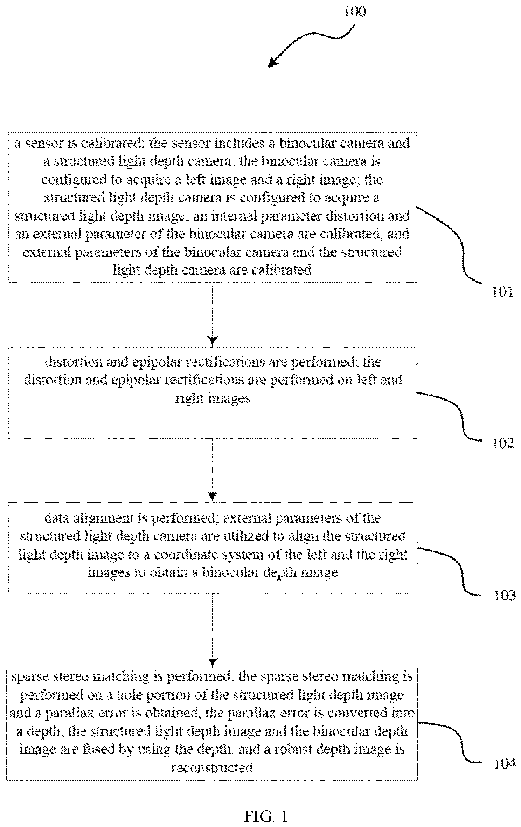

As shown in FIG. 1, the depth image processing method 100 in the embodiment includes following steps.

101: a sensor is calibrated; the sensor includes a binocular camera and a structured light depth camera; the binocular camera is configured to acquire a left image and a right image; the structured light depth camera is configured to acquire a structured light depth image; an internal parameter distortion and an external parameter of the binocular camera are calibrated, and an external parameter of the binocular camera and an external parameter of the structured light depth camera are calibrated.

102: distortion and epipolar rectifications are performed; the distortion and epipolar rectifications are performed on left and right images.

103: data alignment is performed; the external parameter of the structured light depth camera is utilized to align the structured light depth image to a coordinate system of the left and the right images to obtain a binocular depth image.

104: sparse stereo matching is performed; the sparse stereo matching is performed on a hole portion of the structured light depth image and a parallax error is obtained, the parallax error is converted into a depth, the structured light depth image and the binocular depth image are fused by using the depth, and a robust depth image is reconstructed.

Therefore, there is no need to perform the stereo matching on the whole image, but the sparse stereo matching is only performed on the hole portion of the structured light depth image, which significantly reduces the amount of computation required to process the depth image and improves the robustness of the system.

In the embodiment, the performing of the sparse stereo matching (104) specifically includes:
a hole mask is extracted, the sparse stereo matching is performed on an image within the hole mask and the parallax error is obtained.

In the embodiment, the performing of the distortion and epipolar rectifications (102) specifically includes:
matching points for the sparse stereo matching are constrained to align on a horizontal line.

In this case, time for subsequent stereo matching is significantly reduced and the accuracy is greatly improved.

An embodiment of the present invention further relates to a small obstacle detection method 200, the detection method includes the depth image processing method as described above. Thus, the method for processing the depth image will not be repeated here.

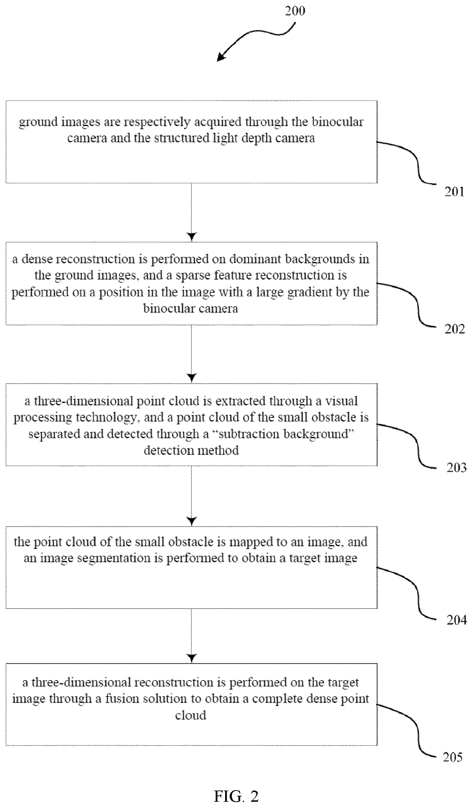

As shown in FIG. 2, in the embodiment, the detection method is applied to detect small obstacles on the ground, and the method further includes:
201: ground images are respectively acquired through the binocular camera and the structured light depth camera;
202: a dense reconstruction is performed on dominant backgrounds in the ground images, and a sparse feature reconstruction is performed on a position in the image with a large gradient by the binocular camera;
203: a three-dimensional point cloud is extracted through a visual processing technology, and a point cloud of the small obstacle is separated and detected through a "subtraction background" detection method;
204: the point cloud of the small obstacle is mapped to an image, and an image segmentation is performed to obtain a target image;
205: a three-dimensional reconstruction is performed on the target image through a fusion solution to obtain a complete dense point cloud.

In this case, the dense reconstruction is performed on the dominant background in the ground image, and the point cloud of the small obstacle is separated and detected through the "subtracted background" detection method, accordingly the overall robustness of the method is improved; the small obstacle is mapped to the image and the image segmentation is performed, accordingly the small obstacle can be completely segmented in order to achieve accurate 3D reconstruction, so that the method provides a guarantee for accurate detection of the small obstacle.

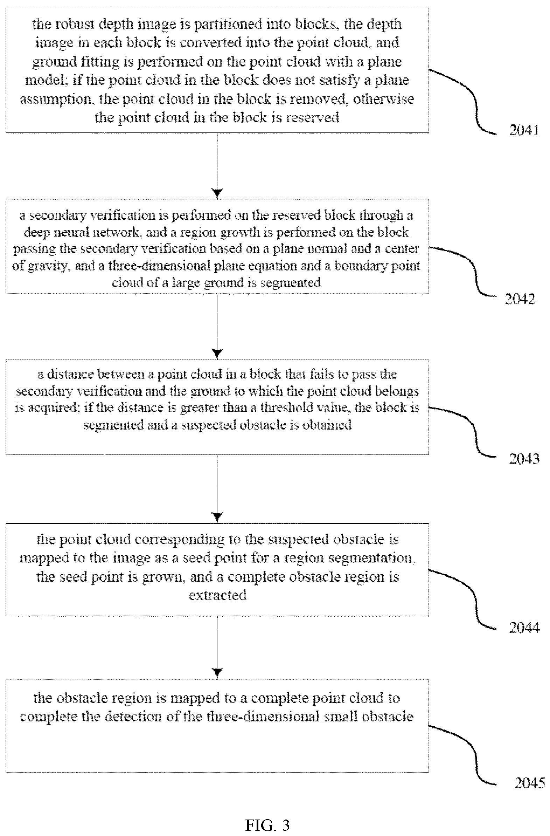

As shown in FIG. 3, in the embodiment, the performing of the sparse stereo matching further includes:
2041: the robust depth image is partitioned into blocks, the depth image in each block is converted into the point cloud, and ground fitting is performed on the point cloud with a plane model; if the point cloud in the block does not satisfy a plane assumption, the point cloud in the block is removed, otherwise the point cloud in the block is reserved;
2042: a secondary verification is performed on the reserved block through a deep neural network, and a region growth is performed on the block passing the secondary verification based on a plane normal and a center of gravity, and a three-dimensional plane equation and a boundary point cloud of a large ground is segmented;
2043: a distance between a point cloud in a block that fails to pass the secondary verification and the ground to which the point cloud belongs is acquired; if the distance is greater than a threshold value, the block is segmented and a suspected obstacle is obtained;
2044: the point cloud corresponding to the suspected obstacle is mapped to the image as a seed point for a region segmentation, the seed point is grown, and a complete obstacle region is extracted;
2045: the obstacle region is mapped to a complete point cloud to complete the detection of the three-dimensional small obstacle.

In this case, the depth image in the block that conforms to the plane model but is not the ground can be excluded through the secondary verification, thereby improving accurate detection of the small obstacles in general.

In the embodiment, the binocular camera includes a left camera and a right camera; the ground image obtained by the left camera includes a left image; the ground image obtained by the right camera includes a right image; and the structured light depth camera is configured to acquire the structured light depth image of the ground.

An embodiment of the present invention further relates to a small obstacle detection system. The detection system can be applied to the small obstacle detection method as described above. The small obstacle detection system will not be repeated here.

In the embodiment, the small obstacle detection system further includes a robot body; the binocular camera and the structured light depth camera are provided on the robot body; and the binocular camera and the structured light depth camera are arranged to tilt towards the ground.

In this case, a region of the ground covered by the image collected by the binocular camera and the structured light depth camera is improved, and the completeness of the recognition of the small obstacle is significantly improved.

Optionally, an embodiment of the present invention further provides a robot. The robot includes a processor, a memory, a network interface, and a database connected through a system bus. The processor of the robot is configured to provide computing and control capabilities. The memory of the robot includes a non-transitory storage medium and an internal memory. The non-transitory storage medium stores an operating system, a computer program, and a database. The internal memory provides an environment for the execution of the operating system and computer program in the non-transitory storage medium. The network interface of the robot is configured to communicate with an external terminal through a network connection. A depth image processing method or a small obstacle detection method is implemented when the computer program is executed by the processor.

An embodiment of the present invention further provides a computer storage medium; the computer storage medium stores a computer program, and the above-mentioned depth image processing method or the small obstacle detection method is implemented when the computer program is executed.

Those of ordinary skill in the art can understand that all or part of the processes in the methods of the above embodiments can be implemented by instructing relevant hardware through a computer program, and the computer program can be stored in a non-transitory computer-readable storage medium, when the computer program is executed, the process may include the steps in the above-mentioned method embodiments. Any reference to the memory, storage, database or other medium used in the various embodiments provided by the present invention may include non-transitory and/or transitory memory. The non-transitory memory may include a read only memory (ROM), a programmable ROM (PROM), an electrically programmable ROM (EPROM), an electrically erasable programmable ROM (EEPROM) or flash memory. The transitory memory may include a random access memory (RAM) or an external cache memory. By way of illustration and not limitation, RAM is available in various forms such as a static RAM (SRAM), a dynamic RAM (DRAM), a synchronous DRAM (SDRAM), a double data rate SDRAM (DDRSDRAM), an enhanced SDRAM (ESDRAM), a synchronous chain Road (Synchlink) DRAM (SLDRAM), a memory bus (Rambus) direct RAM (RDRAM), a direct memory bus dynamic RAM (DRDRAM), and a memory bus dynamic RAM (RDRAM), etc.

The above-mentioned embodiments do not constitute a limitation on the protection scope of the technical solution. Any modifications, equivalent replacements and improvements made within the spirit and principles of the above-mentioned embodiments shall fall within the protection scope of the present invention.

## Claims

1. A depth image processing method, comprising:
calibrating a sensor, the sensor comprising a binocular camera and a structured light depth camera, the binocular camera being configured to acquire a left image and a right image, the structured light depth camera being configured to acquire a structured light depth image, calibrating an internal parameter distortion and an external parameter of the binocular camera, and calibrating an external parameter of the binocular camera and an external parameter of the structured light depth camera;
performing distortion and epipolar rectifications on the left image and the right image;
performing data alignment, aligning the structured light depth image with the external parameter of the structured light depth camera to a coordinate system of the left image and the right image and obtaining a binocular depth image;
performing sparse stereo matching, performing the sparse stereo matching on a hole portion of the structured light depth image and obtaining a parallax error, converting the parallax error into a depth, fusing the structured light depth image and the binocular depth image by using the depth, and reconstructing a robust depth image.

2. The depth image processing method according to claim 1, wherein the performing the sparse stereo matching comprises:
extracting a hole mask, performing the sparse stereo matching on an image within the hole mask and obtaining the parallax error.

3. The depth image processing method according to claim 1, wherein the performing the distortion and epipolar rectifications comprises:
constraining matching points for the sparse stereo matching to align on a horizontal line.

4. A small obstacle detection method, comprising the depth image processing method according to any one of claims 1 to 3, applied to detect a small obstacle on the ground, the method further comprising:
respectively acquiring ground images through the binocular camera and the structured light depth camera;
performing a dense reconstruction on dominant backgrounds in the ground images, and performing a sparse feature reconstruction on a position in an image with a large gradient by the binocular camera;
extracting a three-dimensional point cloud through a visual processing technology, separating and detecting a point cloud of the small obstacle through a "subtraction background" detection method;
mapping the point cloud of the small obstacle to an image, and performing an image segmentation to obtain a target image;
performing a three-dimensional reconstruction on the target image through a fusion solution to obtain a complete dense point cloud.

5. The small obstacle detection method according to claim 4, wherein the performing the sparse stereo matching further comprises:
partitioning the robust depth image into blocks, converting the depth image in each block into the point cloud, and performing ground fitting on the point cloud with a plane model; removing the point cloud in the block if the point cloud in the block does not satisfy a plane assumption, or reserving the point cloud in the block if the point cloud in the block satisfies the plane assumption;
performing a secondary verification on the reserved block through a deep neural network, performing a region growth on the block passing the secondary verification based on a plane normal and a center of gravity, segmenting a three-dimensional plane equation and a boundary point cloud of a large ground;
acquiring a distance between a point cloud in a block that fails to pass the secondary verification and the ground to which the point cloud corresponds, if the distance is greater than a threshold value, segmenting the block and obtaining a suspected obstacle;
mapping the point cloud corresponding to the suspected obstacle to the image as a seed point for a region segmentation, growing the seed point, and extracting a complete obstacle region;
mapping the obstacle region to a complete point cloud to complete the detection of the three-dimensional small obstacle.

6. The small obstacle detection method according to claim 4, wherein the binocular camera comprises a left camera and a right camera, the ground image obtained by the left camera comprises a left image, the ground image obtained by the right camera comprises a right image, and the structured light depth camera is configured to acquire the structured light depth image of the ground.

7. A small obstacle detection system, comprising the small obstacle detection method according to any one of claims 4 to 6.

8. The small obstacle detection system according to claim 7, further comprising a robot body, wherein the binocular camera and the structured light depth camera are provided on the robot body, the binocular camera and the structured light depth camera are arranged to tilt towards the ground.

9. A robot, comprising a processor and a memory storing a computer program, wherein the processor is configured to execute the computer program to implement the depth image processing method according to any one of claims 1 to 3 or the small obstacle detection method according to any one of claims 4 to 6.

10. A computer storage medium, on which a computer program is stored, wherein when the computer program is executed, the depth image processing method according to any one of claims 1 to 3 or the small obstacle detection method according to any one of claims 4 to 6 is implemented.
